## Europäisches Patentamt
## European Patent Office
## Office européen des brevets

(11) Veröffentlichungsnummer: **0 005 473**
**A1**

# EUROPÄISCHE PATENTANMELDUNG

(21) Anmeldenummer: 79101291.7

(22) Anmeldetag: 30.04.79

(51) Int. Cl.²: **C 08 G 18/10**
C 08 L 75/08, E 01 C 13/00
C 08 G 18/76, C 08 L 21/00

(30) Priorität: 12.05.78 DE 2821001

(43) Veröffentlichungstag der Anmeldung:
28.11.79 Patentblatt 79/24

(84) Benannte Vertragsstaaten:
BE DE FR GB IT NL SE

(71) Anmelder: BAYER Aktiengesellschaft
Zentralbereich Patente,Marken und Lizenzen Bayerwerk
D-5090 Leverkusen 1(DE)

(72) Erfinder: Müller, Hans-Jürgen, Dr.
Hahnenweg 1
D-5000 Köln 80(DE)

(72) Erfinder: Ruprecht, Hans-Dieter, Dr.
Andreas-Gryphius-Strasse 3
D-5000 Köln 80(DE)

(72) Erfinder: Zirner, Joachim, Dr.
Carl-Rumpff-Strasse 19
D-5090 Leverkusen 1(DE)

(72) Erfinder: Vogel, Micha, Ing.-grad.
Auf dem Sandberg 110
D-5000 Köln 91(DE)

(54) Verfahren zur Herstellung von Schichtstoffen sowie ein zur Durchführung des Verfahrens geeignetes Bindemittel.

(57) Die vorliegende Erfindung betrifft ein neues Verfahren zur Herstellung von elastischen Schichtstoffen aus Gummi- und/oder elastomeren Kunststoff-Granulaten und einem durch Einwirkung von Wasser aushärtenden Polyurethan-Bindemittel unter Formgebung und Aushärtung mit Wasser, wobei man als Bindemittel ein Gemisch verwendet aus einem Isocyanatgruppen aufweisenden Präpolymeren auf Basis von 2,4- und/oder 2,6-Diisocyanatotoluol und Polyhyd-roxypolyäthern mit einem Polyisocyanat bzw. Polyisocyanat-gemisch der Diphenylmethanreihe, sowie ein derartiges, zur Durchführung des Verfahrens geeignetes Bindemittel.

EP 0 005 473 A1

Croydon Printing Company Ltd.

0005473

- 1 -

BAYER AKTIENGESELLSCHAFT     5090 Leverkusen, Bayerwerk
Zentralbereich
Patente, Marken und Lizenzen    Wr-By-Th

## Verfahren zur Herstellung von Schichtstoffen, sowie ein zur Durchführung des Verfahrens geeignetes Bindemittel

Die vorliegende Erfindung betrifft ein neues Verfahren zur Herstellung elastischer Schichtstoffe, die u.a. zur Herstellung von Sportbahnbelägen geeignet sind, sowie ein für dieses Verfahren geeignetes Polyurethanbindemittel.

Die Herstellung elastischer Schichtstoffe aus Gummi- oder Kunststoffteilchen unter Verwendung von geeigneten Binde- oder Klebemitteln ist bereits bekannt. In der DE-AS 1 534 345 werden wasserdurchlässige elastische Bodenbeläge für Sportplätze beschrieben, wobei die chemische Zusammensetzung des verwendeten Bindemittels nicht näher erläutert wird. Die Verwendung von Zweikomponenten-Polyurethan-Bindemitteln zur Bindung von elastischen Teilchen wird in den DE-ASen 1 955 267 und 1 720 059, sowie in den DE-OSen 2 156 225 und 2 215 893 beschrieben. Bekannt sind außerdem feuchtigkeitshärtende Einkomponenten-Polyurethan-Bindemittel für dieses Einsatzgebiet (DE-OSen 2 021 682, 2 228 111, 2 427 897,

Le A 18 868 - Ausland

- 2 -

DE-AS 2 447625).

Der Nachteil von Zweikomponenten- gegenüber Einkomponenten-Polyurethan-Bindemitteln ist bekannt und wird z.B. in der DE-AS 2 447 625 und in der DE-OS 2 427 897 näher erläutert. Die bereits bekannten Einkomponenten-Polyurethan-Bindemittel stellen Prepolymere dar, die aus Polyhydroxylverbindungen und überschüssigen Polyisocyanaten gebildet werden. Zur Erzielung der für das vorgesehene Einsatzgebiet notwendigen physikalischen Eigenschaften des ausgehärteten Bindemittels, wie z.B. Festigkeit, Reißdehnung, Elastizität, Härte und Alterungsbeständigkeit sowie zur Einstellung einer für die Verarbeitung günstigen Viskosität muß bei der Herstellung der Prepolymere ein NCO/OH-Verhältnis von mindestens 2:1 gewählt werden. Die derart hergestellten Prepolymere enthalten einen deutlichen Anteil an freiem Polyisocyanat. Je nach chemischem Aufbau haben nun diese Produkte verschiedene Nachteile.

Prepolymere auf Basis von 2,4- und/oder 2,6-Diisocyanatotoluol enthalten einen merklichen Anteil des relativ leicht flüchtigen monomeren Isocyanats. Die mit der Verarbeitung Beschäftigten werden daher durch gesundheitsschädliche Isocyanatdämpfe gefährdet. Nach der DT-OS 2 427 897 soll dieser Nachteil dadurch vermieden werden, daß man dem Gemisch aus Gummigranulat und Bindemittel Wasser zusetzt, wodurch das Abdampfen des freien Isocyanats verhindert werden soll. Als Beweis wird der fehlende Geruch des Isocyanats angeführt. Dabei wird aber übersehen, daß Isocyanat-Konzentrationen unterhalb der

Le A 18 868

Geruchswelle bereits gesundheitsschädlich sein können. Außerdem sind die mit dem Abfüllen, Dosieren und Einbringen in den Mischer beschäftigten Personen weiterhin gefährdet. Die Zugabe von Wasser hat den Nachteil, daß die Härtungsreaktion des Bindemittels bereits im Mischer beginnt, wobei die Viskosität des Bindemittels ansteigt und die Verarbeitungszeit verkürzt wird.

Der Nachteil des Gehaltes an leicht flüchtigem Isocyanat wird durch Verwendung von Prepolymeren auf Basis von Diphenylmethandiisocyanat, wie sie z.B. in der DE-AS 2 447 625 beschrieben sind, vermieden. Diese wiederum haben eine höhere Viskosität und Reaktivität als entsprechende Produkte auf Basis Diisocyanatotoluol, was vor allem bei der Verarbeitung im Freien unter bestimmten Klimabedingungen von Nachteil sein kann. Bei kühler Witterung erschwert die höhere Viskosität die Verteilung und Formgebung des Mischgutes. Bei warmer und sehr feuchter Witterung wird infolge der höheren Reaktivität die zur Verarbeitung des Mischgutes zur Verfügung stehende Zeitspanne stark verkürzt.

Der Erfindung liegt die Aufgabe zugrunde, die oben beschriebenen Nachteile der bekannten Polyurethan-Bindemittel zu vermeiden.

Diese Aufgabe konnte überraschenderweise dadurch gelöst werden, daß als freie Isocyanatgruppen aufweisendes Polyurethan-Bindemittel die nachstehend näher beschriebenen Gemische eingesetzt werden.

Le A 18 868

Gegenstand der Erfindung ist somit ein Verfahren zur Herstellung elastischer Schichtstoffe durch Vermischen von Gummi und/oder elastomeren Kunststoff-Granulaten, sowie gegebenenfalls weiteren Hilfs- und Zusatzstoffen mit einem durch Einwirkung von Wasser aushärtenden Polyurethan-Bindemittel auf Basis von hydroxylgruppenhaltigen Polyäthern und Polyisocyanaten, sich anschließender Formgebung und Aushärtung mit Wasser, dadurch gekennzeichnet, daß man als Polyurethan-Bindemittel ein Gemisch verwendet, welches im wesentlichen aus

a) einem freie Isocyanatgruppen aufweisenden Prepolymeren aus 2,4- und/oder 2,6-Diisocyanatotoluol und Polyhydroxypolyäthern mit einem NCO-Gehalt von 1,0 bis 6,3 Gew.-% und einem Gehalt an freiem Diisocyanatotoluol von maximal 0,5 Gew.-%, welches durch Umsetzung der genannten Reaktionspartner unter Verwendung eines molaren Diisocyanatüberschusses von mindestens 2:1 und anschließender Entfernung des nicht umgesetzten Diisocyantotoluols erhalten worden ist, und

b) einem Polyisocyanat bzw. Polyisocyanatgemisch der Diphenylmethan-Reihe besteht,

wobei das Mengenverhältnis der Komponenten a) und b) so gewählt wird, daß das Gemisch einen NCO-Gehalt im Bereich von 6,5 bis 15 Gew.-% aufweist.

Gegenstand der Erfindung ist auch ein zur Durchführung des erfindungsgemäßen Verfahrens geeignetes Bindemittel, welches dadurch gekennzeichnet ist, daß es im wesentlichen ein Gemisch aus

- 5 -

a) einem freie Isocyanatgruppen aufweisenden Prepolymeren aus 2,4- und/oder 2,6-Diisocyanatotoluol und
Polyhydroxypolyäthern mit einem NCO-Gehalt von 1,0
bis 6,3 Gew.-% und einem Gehalt an freiem Diisocyanatotoluol von maximal 0,5 Gew.-%,welches durch
Umsetzung der genannten Reaktionspartner unter Verwendung eines molaren Diisocyanatüberschusses von
mindestens 2:1 und anschließender Entfernung des nicht
umgesetzten Diisocyanatotoluols erhalten worden ist, und

b) einem Polyisocyanat bzw. Polyisocyanatgemisch der
Diphenylmethan-Reihe

darstellt, wobei die Komponenten a) und b) in dem Gemisch
in solchen Mengenverhältnissen vorliegen, daß das Gemisch
einen NCO-Gehalt von 6,5 bis 15 Gew.-% aufweist.

Die Komponente a) des erfindungsgemäßen Bindemittels stellt
ein freie Isocyanatgruppen aufweisendes Prepolymer auf
Basis von 2,4-Diisocyanatotoluol bzw. dessen technischen
Gemischen mit 2,6-Diisocyanatotoluol und Polyhydroxypolyäthern der nachstehend näher beschriebenen Art dar. Die
NCO-Prepolymeren weisen einen NCO-Gehalt von 1,0 bis 6,3
vorzugsweise 1,9 bis 5,0 Gew.-% und einen Gehalt an
freiem Diisocyanatotoluol von maximal 0,5 Gew.-% auf. Ihre
Herstellung gelingt in an sich bekannter Weise durch Umsetzung des Diisocyanatotoluols in einem molaren Überschuß
von mindestens 2:1 mit dem Hydroxylgruppen aufweisenden
Polyäther, vorzugsweise in einem molaren NCO/OH-Verhältnis
von 2:1 bis 10:1, und anschließender Entfernung des nicht
umgesetzten Diisocyanatotoluols beispielsweise durch Dünnschichtdestillation bis auf einen Restgehalt von maximal
0,5 Gew.-%.

Le A 18 868

Bei den zur Herstellung der Prepolymeren eingesetzten hydroxylgruppenhaltigen Polyäthern handelt es sich insbesondere um 2 bis 3 Hydroxylgruppen aufweisende Polyäther mit einem Molekulargewicht von 1500 bis 6000 vorzugsweise 2000 bis 4000 bzw. um beliebige Gemische derartiger Polyäther. Sie sind auf an sich bekannte Weise durch Anlagerung von Äthylenoxid und/oder Propylenoxid an geeignete Startermoleküle zugänglich. Bei der Herstellung der Polyäther können die genannten Alkylenoxide auch im Gemisch oder nacheinander eingesetzt werden. Geeignete Starterkomponenten sind z.B. Wasser, Äthylenglykol, Propylenglykol-1,2, Trimethylolpropan oder Glyzerin. Die Herstellung der für die erfindungsgemäßen Polyurethan-Bindemittel verwendeten Prepolymere erfolgt vorzugsweise durch Umsetzung der Komponenten in den genannten Mengenverhältnissen bei 15 bis 100°C, vorzugsweise 20 bis 80°C und anschließender Dünnschichtdestillation.

In den erfindungsgemäßen Bindemitteln liegen die NCO-Prepolymeren im Gemisch mit Polyisocyanaten der Diphenylmethanreihe vor. Unter "Polyisocyanaten der Diphenylmethanreihe" sind hierbei sowohl die bekannten Diisocyanatodiphenylmethan-Isomeren, insbesondere das 2,2'-, 2,4'- und/oder insbesondere 4,4'-Diisocyanatodiphenylmethan als auch Gemische dieser Isomeren als auch Gemische dieser Isomeren mit höhermolekularen Polyisocyanaten der Diphenylmethanreihe zu verstehen. Diese letztgenannten Polyisocyanatgemische entstehen bekanntlich bei der Phosgenierung von, in Gegenwart von sauren Katalysatoren hergestellten Anilin/Formaldehyd-Kondensaten. Flüssige,

Le A 18 868

modifizierte Diisocyanato-diphenylmethane, insbesondere durch Carbodiimid-,Urethan-, Allophanat-, Isocyanurat-, Harnstoff- und/oder Biuretgruppen modifizierte Polyisocyanate der Diphenylmethanreihe sind im Prinzip als Zumischkomponente für die NCO-Prepolymeren ebenfalls geeignet, jedoch weniger bevorzugt.

Die Polyisocyanate der Diphenylmethanreihe werden mit den NCO-Prepolymeren in solchen Mengenverhältnissen vermischt, daß die Gemische einen NCO-Gehalt von 6,5 bis 15 vorzugsweise 8 bis 12 Gew.-% und eine Viskosität von vorzugsweise 1000 bis 10 000 mPa.s bei 25°C aufweisen. Die mittlere NCO-Funktionalität der Gemische liegt vorzugsweise zwischen 2 und 2,5.

Die beim erfindungsgemäßen Verfahren verwendeten Gummi- und/oder elastomeren Kunststoff-Granulate können beliebiger Größe und Form sein. Bevorzugt verwendet werden jedoch elastische Granulate aus Gummi- oder Kunststoffabfällen in den Korngrößen von 0,5 bis 6 mm. Derartige Abfälle entstehen z.B. bei der Reifenrunderneuerung und bei der Fertigung technischer Gummi- oder Kunststoffartikel.

Zur Herstellung der Schichtstoffe werden die Gummi- oder elastomeren Kunststoffgranulate in Mengen von 1 bis 20 Gew.-Teilen, vorzugsweise 3 bis 10 Gew.-Teilen, bezogen auf 1 Gew.-Teil des Polyurethanbindemittels in an sich bekannter Weise gegebenenfalls unter Zusatz der nachstehend genannten Hilfs- und Zusatzstoffe, beispielsweise in einem Zwangsmischer, gemischt.

Le A 18 868

Die Aushärtung der Mischung erfolgt nach vorgenommener Formgebung durch Einwirkung von Wasser, vorzugsweise Luftfeuchtigkeit. Der Aushärteprozeß kann durch Zumischen von in der Polyurethan-Chemie gebräuchlichen Katalysatoren, z.B. tertiären Aminen und organischen Metallverbindungen z.B. zum Bindemittel beschleunigt werden. Außerdem können als Zusätze Weichmacher, Farbpigmente in Pulverform oder als Farbpasten, anorganische Füllstoffe, wie z.B. Sand, Kaolin, Kreide, Bariumsulfat, Siliziumdioxid, Emulgatoren, Flammschutzmittel, Alterungsschutzmittel und Haftvermittler eingesetzt werden. Die physikalischen Eigenschaften der erfindungsgemäß hergestellten elastischen Flächengebilde, wie z.B. Elastizität, Härte, Raumgewicht, Wasserdurchlässigkeit, können durch Variation von Größe, Gestalt und Beschaffenheit der Gummi- oder Kunststoffgranulate, Bindemittelgehalt, mittlere NCO-Funktionalität des Bindemittels, Gehalt des Bindemittels an Isocyanatgruppen, Verdichtungsgrad und Aushärtebedingungen in weiten Grenzen variiert werden.

Die nach dem erfindungsgemäßen Verfahren hergestellten elastischen Schichtstoffe finden bevorzugt als Bodenbeläge Verwendung, z.B. als Sportflächenbeläge für Spielfelder, Leichtathletiklaufbahnen und Sporthallen, für Kinderspielplätze und Gehwege, aber auch als Isolierschichten zur Schall- und Wärmedämmung und Schwingungsdämpfung.

Vorzugsweise erfolgt die Formgebung bei der Herstellung der hier genannten Flächengebilde durch Aufschütten, Verteilen und Verdichten der Mischung aus Polyurethanbinde-

Le A 18 868

- 9 -

mittel und Gummi- oder Kunststoffgranulaten mittels an sich für die Herstellung von Boden- und Straßenbelägen bekannten Maschinen und Werkzeugen auf die jeweils zu beschichtende Unterlage, wie z.B. Beton, Estrich oder Asphalt in der gewünschten Schichtdicke, die bei den genannten Einsatzgebieten im allgemeinen 2 bis 30 mm beträgt. Die Formgebung kann jedoch auch in gegebenenfalls beheizten Formen oder Pressen erfolgen, wobei die Flächengebilde nach der Aushärtung mit Wasser bzw. Feuchtigkeit in Form von Platten erhalten werden, die dann ihrerseits in an sich bekannter Weise zur Herstellung der genannten Beläge verlegt werden. Unabhängig von der gewählten Art der Formgebung erfolgt die Aushärtung, bevorzugt bei Raumtemperatur, durch Einwirkung von Luftfeuchtigkeit. Eine beschleunigte Aushärtung kann durch Besprühen mit Wasser oder auch mittels Dampfbehandlung erzielt werden.

Die beim erfindungsgemäßen Verfahren zum Einsatz gelangenden Polyurethan-Bindemittel weisen gegenüber den bekannten Bindemitteln dieser Art mehrere Vorteile auf. Wegen der günstigen Viskosität und Reaktivität ist ihre Verarbeitbarkeit in einem breiten Bereich der Temperatur und Luftfeuchtigkeit möglich, was vor allem bei der Herstellung der elastischen Flächengebilde direkt an einer Baustelle im Freien, z.B. auf einem Sportplatz, von Bedeutung ist. Gleichzeitig besitzen die bei dem erfindungsgemäßen Verfahren einzusetzenden Polyurethan-Bindemittel einen niedrigen Isocyanat-Dampfdruck, so daß der Aufwand an erforderlichen Arbeitsschutzmaßnahmen entsprechend gering gehalten werden kann.

Le A 18 868

- 10 -

Die beim erfindungsgemäßen Verfahren eingesetzten Bindemittel eignen sich im übrigen auch zur Herstellung von
Kunstharzmörteln, als Isocyanat-Komponente für 2-Komponenten-
Polyurethan-Gießmassen, als Lackrohstoffe und als Klebstoffe.

Die folgenden Beispiele betreffen die Herstellung von Polyurethan-Bindemitteln und deren Verarbeitung zu elastischen
Flächengebilden nach dem erfindungsgemäßen Verfahren. Dabei
wird in einem Vergleich die Überlegenheit dieser Polyurethan-Bindemittel gegenüber bekannten Bindemitteln aufgezeigt.

**Le A 18 868**

- 11 -

Beispiel 1 (Herstellung eines erfindungsgemäßen Bindemittels)

2000 g (1 Mol) Polypropylenglykol (Molekulargewicht 2000, 1,7 Gew.-% Hydroxylgruppen) und 696 g (4 Mol) 2,4-Diisocyanatotoluol werden 3 Stunden bei 70°C gerührt und anschließend dünnschichtdestilliert. Man erhält ein Prepolymer mit einem NCO-Gehalt von 3,6 Gew.-% und einem Gehalt an freiem 2,4-Diisocyanatotoluol von 0,3 Gew.-%. 2348 g des Prepolymers werden bei 25°C mit 637 g eines Gemisches aus 60 Gew.-% Diphenylmethan-2,4'-diisocyanat und 40 Gew.-% Diphenylmethan-4,4'-diisocyanat vermischt.

NCO-Gehalt: 10,0 %

Viskosität (25°C): 1800 mPas (im Rotationsviskosimeter) Gehalt an freiem Diisocyanatotoluol: 0,21 %.

Beispiel 2 (Vergleich)

2000 g Polypropylenglykol (Molekulargewicht 2000, 1,7 Gew.-% Hydroxylgruppen) und 740 g 2,4-Diisocyanatotoluol werden 3 Stunden bei 70°C gerührt.

NCO-Gehalt: 9,9 %

Viskosität (25°C): 1500 mPas (Im Rotationsviskosimeter) Gehalt an freiem 2,4-Diisocyanatotoluol: 15 %.

Beispiel 3 (Vergleich)

2000 g Polypropylenglykol (Molekulargewicht 2000, 1,7 Gew.-% Hydroxylgruppen) und 1204 g eines Gemisches aus

Le A 18 868

- 12 -

60 Gew.-% Diphenylmethan-2,4'-diisocyanat und 40 % Diphenylmethan-4,4'-diisocyanat werden 3 Stunden bei 60°C gerührt.

NCO-Gehalt: 9,9 %

Viskosität (25°C): 2850 mPas (im Rotationsviskosimeter)

Beispiel 4 (erfindungsgemäß)

In einem Topf aus Polyäthylen werden 160 g des nach Beispiel 1 hergestellten Polyurethanbindemittels mit 0,32 g Zinn-II-Octoat vermischt. Nach Zugabe von 640 g eines Granulats aus Lauffächengummi von Autoreifen der Korngröße 1 bis 4 mm wird so lange gerührt, bis die Gummiteilchen vollständig mit Bindemittel benetzt sind. Die Mischung wird auf einer mit Polyäthylenfolie bespannten festen Unterlage in einem mit einem Trennmittel bestrichenen Rahmen der Abmessungen 30 x 30 x 2 cm gefüllt und mit einem Glätter auf eine Dicke von 11-12 mm verdichtet. Die Aushärtung erfolgt bei Raumtemperatur unter Zutritt von Luftfeuchtigkeit. Die Platte kann nach 2 Tagen entformt werden. Die Endfestigkeit ist nach spätestens zweiwöchiger Lagerung bei Raumtemperatur erreicht.

Die Platte besitzt folgende physikalische Eigenschaften:

Zugfestigkeit: 0,6 - 0,8 MPa (nach DIN 53 504)

Reißdehnung: 50 - 70 % (nach DIN 53 504)

Druckspannung: 0,5 - 0,7 MPa bei 20 % Stauchung (in Anlehnung an DIN 53 577)

**Le A 18 868**

In einem weiteren Versuch wird an einer in der oben beschriebenen Weise hergestellten Mischung festgestellt,
wie lange diese gut zu einer Platte mit gleichmäßiger
Oberfläche zu verarbeiten ist. Es ergibt sich eine Verarbeitungszeit von ca. 75 Minuten.


Beispiel 5 (Vergleich)

Es wird wie in Beispiel 4 verfahren, aber unter Verwendung
des in Beispiel 2 beschriebenen Polyurethan-Bindemittels.
Der mit der Herstellung der Platte Beschäftigte muß sich
durch ein Atemschutzgerät vor den sich bildenden Isocyanatdämpfen schützen. Die Platte besitzt praktisch die gleichen
physikalischen Eigenschaften wie diejenigen in Beispiel 4.
Die Verarbeitungszeit der Mischung beträgt ebenfalls ca.
75 Minuten.


Beispiel 6 (Vergleich)

Es wurde wie in Beispiel 4 verfahren, aber unter Verwendung des im Beispiel 3 beschriebenen Polyurethanbindemittels.

Die Platte besitzt praktisch die gleichen physikalischen
Eigenschaften wie diejenigen in Beispiel 4. Die Verarbeitungszeit der Mischung beträgt im Unterschied zu
Beispiel 4 nur 30 Minuten.


Le A 18 868

- 14 -

<u>Patentansprüche</u>

1. Verfahren zur Herstellung elastischer Schichtstoffe durch Vermischen von Gummi- und/oder elastomeren Kunststoff-Granulaten, sowie gegebenenfalls weiteren Hilfs- und Zusatzstoffen mit einem durch Einwirkung von Wasser aushärtenden Polyurethan-Bindemittel auf Basis von hydroxylgruppenhaltigen Polyäthern und Polyisocyanaten, sich anschließender Formgebung und Aushärtung mit Wasser, dadurch gekennzeichnet, daß man als Polyurethan-Bindemittel ein Gemisch verwendet, welches im wesentlichen aus

   a) einem freie Isocyanatgruppen aufweisenden Prepolymeren aus 2,4- und/oder 2,6-Diisocyanatotoluol und Polyhydroxypolyäthern mit einem NCO-Gehalt von 1,0 bis 6,3 Gew.-% und einem Gehalt an freiem Diisocyanatotoluol von maximal 0,5 Gew.-%, welches durch Umsetzung der genannten Reaktionspartner unter Verwendung eines molaren Diisocyanatüberschusses von mindestens 2:1 und anschließender Entfernung des nicht umgesetzten Diisocyanatotoluols erhalten worden ist, und

   b) einem Polyisocyanat bzw. Polyisocyanatgemisch der Diphenylmethan-Reihe besteht,

   wobei das Mengenverhältnis der Komponente a) und b) so gewählt wird, daß das Gemisch einen NCO-Gehalt im Bereich von 6,5 bis 15 Gew.-% aufweist.

2. Verfahren gemäß Anspruch 1, dadurch gekennzeichnet, daß die Aushärtung durch Einwirkung von Luftfeuchtigkeit erfolgt.

<u>Le A 18 868</u>

3. Zur Durchführung des Verfahrens gemäß Anspruch 1 und 2 geeignetes Bindemittel, dadurch gekennzeichnet, daß es im wesentlichen ein Gemisch aus

a) einem freie Isocyanatgruppen aufweisenden Prepolymeren aus 2,4- und/oder 2,6-Diisocyanatotoluol und Polyhydroxypolyäthern mit einem NCO-Gehalt von 1,0 bis 6,3 Gew.-% und einem Gehalt an freiem Diisocyanatotoluol von maximal 0,5 Gew.-%, welches durch Umsetzung der genannten Reaktionspartner unter Verwendung eines molaren Diisocyanatüberschusses von mindestens 2:1 und anschließender Entfernung des nicht umgesetzten Diisocyanatotoluols erhalten worden ist, und

b) einem Polyisocyanat bzw. Polyisocyanatgemisch der Diphenylmethan-Reihe

darstellt, wobei die Komponenten a) und b) in dem Gemisch in solchen Mengenverhältnissen vorliegen, daß das Gemisch einen NCO-Gehalt von 6,5 bis 15 Gew.-% aufweist.

Le A 18 868

))) Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>GB - A - 1 052 041</u> (DUNLOP)<br><br>* Seite 3; Ansprüche 1,3-5; Seite 1, Zeile 59 bis Seite 2, Zeile 5; Seite 2, Zeilen 48-51 *<br><br>-- | 1-3 |
| D | <u>DE - A - 2 447 625</u> (BAYER)<br><br>* Seite 13; Ansprüche 1,2; Seite 2, letzter Absatz bis Seite 3, Absatz 1; Seite 3, letzter Absatz bis Seite 4, Absatz 1; Seite 5, Absatz 1 bis Seite 6, Absatz 1 *<br><br>& NL - A - 75 11615<br>& FR - A - 2 286 844<br><br>-- | 1-3 |
| D | <u>DE - A - 2 427 897</u> (BASF)<br><br>* Seiten 14,15; Ansprüche 1,3,6; Seite 6, Absätze 2-5; Seite 7, letzter Absatz bis Seite 8, Absatz 1 *<br><br>& FR - A - 2 273 830<br><br>---- | 1-3 |

**KLASSIFIKATION DER ANMELDUNG (Int.Cl.²)**

C 08 G 18/10
C 08 L 75/08
E 01 C 13/00
C 08 G 18/76
C 08 L 21/00

**RECHERCHIERTE SACHGEBIETE (Int. Cl.²)**

C 08 L 75/08
          75/04
          75/00
C 08 G 18/10
          18/12
          18/76
E 01 C 13/00
C 08 L 19/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Den Haag | 16-08-1979 | V. PUYMBROECK |

EPA form 1503.1  06.78